# EUROPEAN PATENT APPLICATION

(11) **EP 1 199 098 A1**
(43) Date of publication of application: **24.04.2002**
(21) Application number: 00650163.9
(22) Date of filing: 19.10.2000
(51) Int. Cl.: B01D 61/10, C02F 1/44, B63J 1/00, B63J 3/04, F03B 13/10, F04B 17/00, F04B 1/14

(54) **A water purifying apparatus**

(71) Applicant: Bowler, Gerardine, Kells, Country Kerry (IE)
(72) Inventor: Bowler, Gerardine, Kells, Country Kerry (IE)

(57) **Abstract**

An desalination apparatus 1 is towed behind a yacht (Y) on a high strength tube (2). An impeller (6) drives a high pressure pump (14) which draws sea water into the housing (5) where it is filtered and then pumped into a high pressure chamber (10) containing a reverse osmosis (RO) membrane (11). The pump (14) provides the energy for permeation in the RO membrane. Permeate flows into a central duct (12) and out into the tube (2) for delivery to the yacht. No yacht power plant is required and no environmental pollution is generated.

## Description

### Introduction

The invention relates to a water purifying apparatus of the type comprising a filtration means and a pump means for pumping inlet water through the filtration means to provide clean water. It is particularly, but not exclusively, for desalinating water using the reverse osmosis process.

Modern commercial desalination plants usually exploit the reverse osmosis (henceforth referred to as "RO" in accordance with the established practice in the water purification industry world wide) system for desalination and/or purification. This semi-permeable membrane technology has become well known in recent years. The attraction of RO is that it is possibly the most energy efficient of any of the currently known methods of desalination of sea water or purification of contaminated land water for human consumption.

Considerable energy is required for any of the currently known processes, even RO. In the case of RO, the energy required is typically some 6 to 10 Watts per litre of drinking water output. In a hostile environment, jungle, or on ocean crossing by a sailing vessel, energy is either in short supply or unavailable.

An energy requirement of 6 to 10 watts per litre equates to at least a ½ Amp Hour per litre (2 ½ Amps per gallon) @ 12 Volts if run from a typical yacht battery bank. An alternative is to mount the RO high pressure pump directly driven from the vessel's engine. Accordingly, on a sailing yacht with a typical crew of 4 persons requiring 18 litres each per day some 5 hours of engine running daily is needed to produce 70 litres (16 gallons). In any event, even if battery driven, it is necessary to run the vessel's engine, in that case, for battery charging duties. Thus, it will be seen that engine running is at present required if it is wished to provide drinking water. If the average yacht auxiliary diesel engine is of typically 2 litres it is necessary to run it at some 1,600 r.p.m. to drive the high pressure water pump or generate the requisite electricity using existing technology. This equates to 192,000 litres of exhaust fumes being discharged into the atmosphere per hour for a typical output quantity of drinking water of some 22 litres. Expressed another way, each litre of drinking water using current systems causes a discharge of 8,700 litres of exhaust gases to the atmosphere.

Also, existing marine desalination machines require intake and output holes to be drilled in the bottom of the vessel, and it is necessary to install extensive pipework runs to connect the intake filters, high pressure pump, the reverse osmosis cartridge arrays and the brine discharge valves. Further, installation of electric power and control systems are required by existing machines.

Thus, the invention is directed towards providing a water purifying apparatus which is more versatile and has less impact on existing power plant. For example, in the application of desalination for boats, it is an object of the invention to eliminate the use of an engine and/or battery bank and to obviate the requirement to carry additional fuel for desalination. For sailing vessels, for example, a saving in fuel and water weight results in a higher speed for any give sailing condition.

### Statements of Invention

According to the invention, there is provided a water purifying apparatus comprising a filtration means and a pump means for pumping inlet water through the filtration means to provide clean water, characterised in that,
the pump means comprises means for receiving energy from relative movement of the apparatus with respect to water from which it draws the inlet water.

In one embodiment, the pump means comprises an impeller and the apparatus comprises a streamlined housing supporting the impeller.

In one embodiment, the housing is of circular cross-section.

In one embodiment, the filtration means comprises a permeate outlet connected to a permeate outlet tube having sufficient strength for towing the apparatus.

In one embodiment, the filtration means comprises a high pressure chamber and the pump means comprises means for pumping inlet water into said high pressure chamber.

In one embodiment, the pump means comprises water inlet filters for pre-filtration before final filtration or permeation in the high pressure chamber.

In one embodiment, the water inlet filters are located in an annular outer lower pressure chamber surrounding the high pressure chamber.

In one embodiment, the pump means comprises a swash plate driven by the impeller, and pistons connected to the swash plate and running in cylinders connected for pumping inlet water to the high pressure chamber.

In one embodiment, the filtration means comprises a tubular filter having a central duct for flow of clean water after being forced radially inwards through the filter.

In one embodiment, the apparatus is a desalination apparatus, and the high pressure chamber contains a reverse osmosis membrane.

In one embodiment, the membrane is a spiral-wound semi-permeable reverse osmosis membrane having a central perforated duct to direct the flow of permeate after being permeated radially inwardly through the membrane.

In one embodiment, the high pressure chamber comprises a brine outlet valve adjacent to an end of the membrane.

According to another aspect, the invention provides a water desalination apparatus comprising:
a streamlined housing of substantially circular cross-sectional shape;
an impeller mounted on the housing and driving a high pressure water pump within the housing;
a water inlet in the housing for delivery of sea water to the high pressure pump as the apparatus is drawn through the sea, and
a high pressure reverse osmosis chamber comprising:-
   an inlet valve for receiving water pumped by the high pressure pumps, and
   a reverse osmosis membrane connected to a permeate outlet for delivery of permeated water to an outlet tube, and to a brine outlet for delivery of brine to the sea.

In one embodiment, the membrane is a spiral-wound semi-permeable membrane having a central perforated duct to direct the flow of permeate after being permeated radially inwardly through the membrane.

### Detailed Description of the Invention

The invention will be more clearly understood from the following description of some embodiments thereof, given by way of example only with reference to the accompanying drawings in which:-
Fig. 1 is a diagrammatic view showing operation of a water desalination apparatus of the invention for desalination for a yacht;
Fig. 2 is a side view of the apparatus;
Fig. 3 is a diagrammatic cross-sectional end view of the apparatus;
Fig. 4 is a cross-sectional side view showing water flows; and
Fig. 5 is a more detailed cross-sectional side view showing construction of a pump.

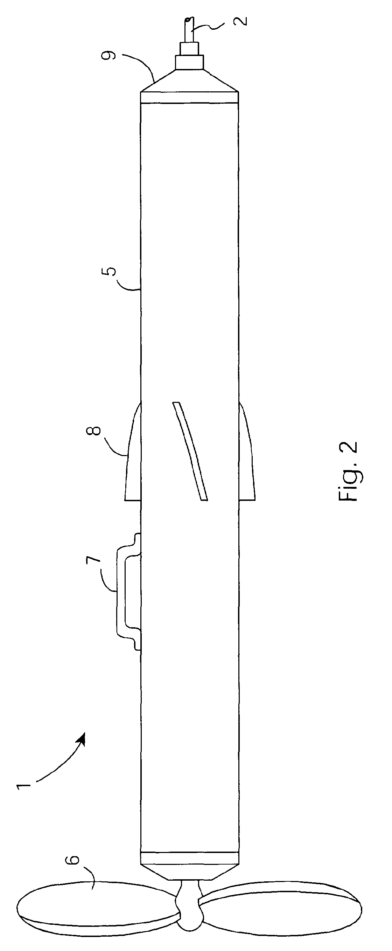

Referring to the drawings there is shown a water desalination apparatus 1 in use. The apparatus 1 is towed on a high-strength tube 2 connected to a yacht Y. As shown in Fig. 2, the apparatus 1 comprises a cylindrical housing 5 supporting an impeller 6, a carrying handle 7, and hydroplanes 8. A front coupler 9 allows connection of the tube 2.

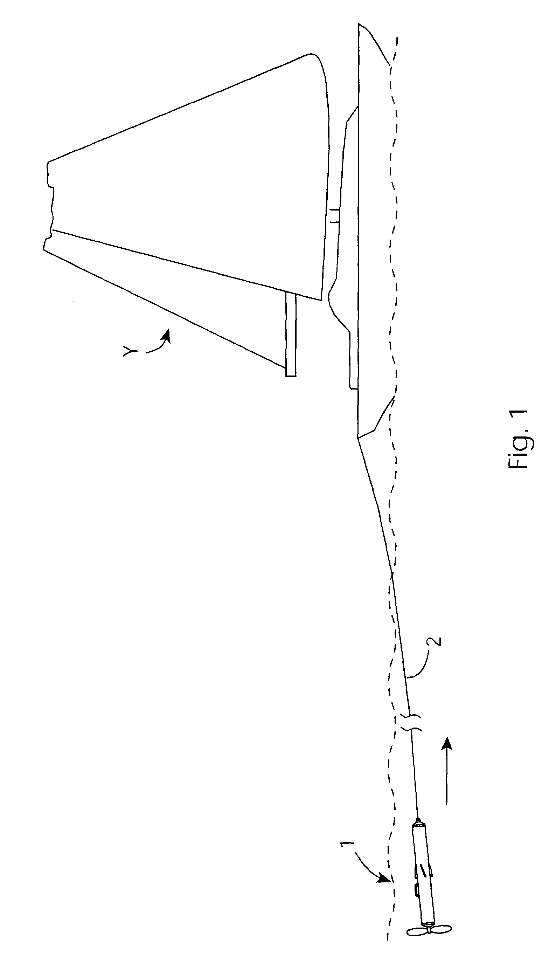

The apparatus 1 is drawn through the sea as shown in Fig. 1, relative movement of the apparatus 1 and the sea being provided by the motion of the yacht. This power is sufficient for the apparatus 1 to draw in sea water, to purify it, and to pump it to the yacht through the tube. When not in use, the apparatus 1 is easy to carry using the handle 7 and is compact and convenient.

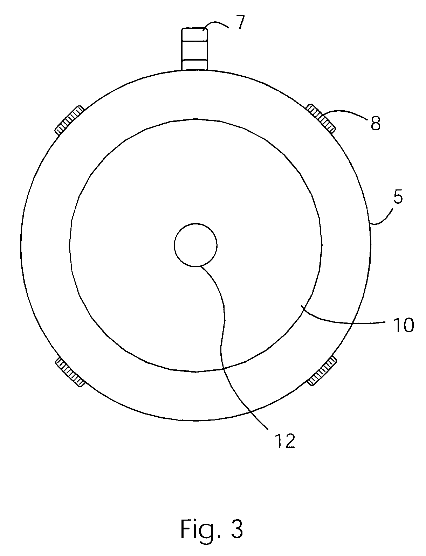

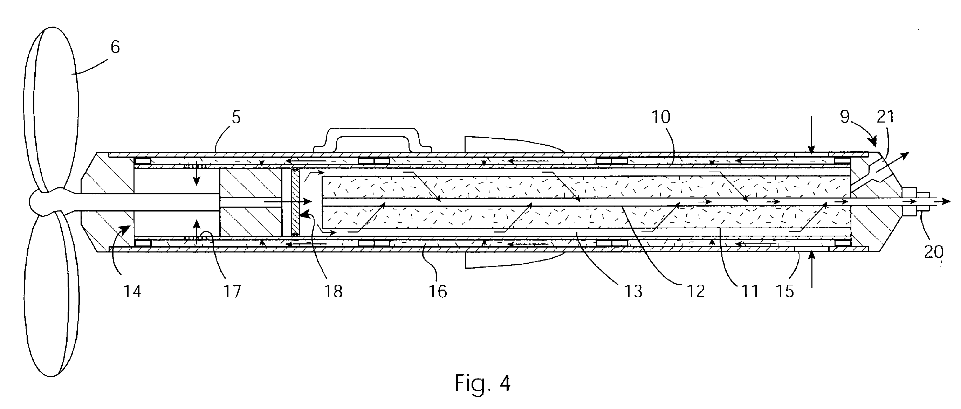

In more detail and referring to Figs. 3 to 5 also, the apparatus 1 also comprises an inner cylinder 10 providing a high pressure reverse osmosis (RO) membrane chamber 13 containing a spiral-wound semi-permeable RO membrane 11 with a central duct 12 for permeate. The pump means comprises a swash plate pump 14 driven by the impeller 6.

Following the flow of water, a primary inlet 15 at the front of the housing 5 has a coarse filter. The space between the inner cylinder 10 and the housing 5 houses an annular filter 16 through which the inlet water flows until it reaches the pump 14. The pump 14 has inlets 17 which perform additional filtration and allow flow of inlet water to a pump outlet 18 for pumping to the high pressure chamber 13.

The water is under high pressure in the chamber 13 and provides the energy for permeation in the RO membrane 11, and flow of permeate into the central duct 12. At the front of the chamber 13 the permeate flows from the central duct 12 to the tube 2 via the coupler 9, and brine flows out to the sea via a pressure maintaining valve 21 in the coupler 9.

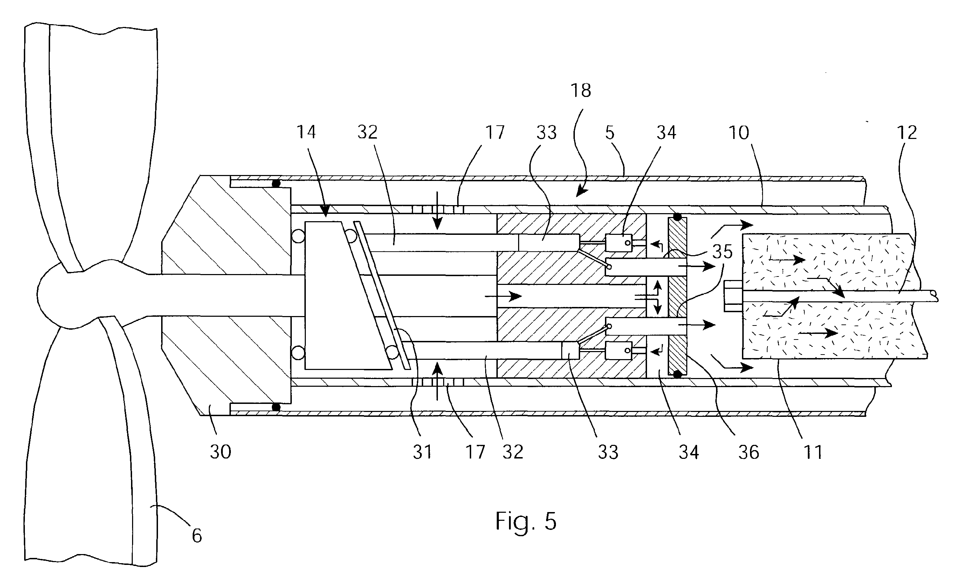

Referring particularly to Fig. 5, in the pump 14 the impeller 6 is supported by a bearing 30 and the impeller shaft drives a swash plate having axial thrust bearings 31 in turn driving three water-pumping pistons 32 (only two of which are shown) in cylinders 33. The cylinders 33 have suction inlet valves 34 and high pressure outlet valves 35 extending through an end wall 36. This is a very effective pumping mechanism and allows the impeller to provide sufficient energy for RO to occur within the chamber 13.

A high proportion of the total water flow through the chamber 13 is used to continually keep the membrane surfaces flushed and clean. The brine is of high salt and contaminant content and is flushed out through the valve 21 which maintains the pressure in the reverse osmosis chamber 13.

While the apparatus 1 has been illustrated in use being drawn in the wake of the boat, it could alternatively be mounted stationary in flowing water to achieve the same effect. It does not matter how the relative motion of the apparatus and water is achieved. Such an application may arise, for example, in military/defence use in hostile environments. The apparatus may additionally comprise an electrical generator to generate electrical power from the relative movement with the water. Also, the apparatus may further comprise an alternative power source such as an electrical motor or a hand pump to allow operation where relative movement with water is not possible.

It will be appreciated that the invention provides an apparatus which is self-contained and portable. It requires no installation, electrical power, or pumping. It is thus very versatile and has virtually no impact on operation of a boat. Another major advantage is that the apparatus generates no environmental pollution. Also, the invention eliminates installation work and associated costs as it is fully self-contained and portable.

The invention is not limited to the embodiments described but may be varied in construction and detail.

## Claims

1. A water purifying apparatus comprising a filtration means and a pump means for pumping inlet water through the filtration means to provide clean water, **characterised in that**,
the pump means comprises means for receiving energy from relative movement of the apparatus with respect to water from which it draws the inlet water.

2. A water purifying apparatus as claimed in claim 1, wherein the pump means comprises an impeller and the apparatus comprises a streamlined housing supporting the impeller.

3. A water purifying apparatus as claimed in claim 2, wherein the housing is of circular cross-section.

4. A water purifying apparatus as claimed in claim 2 or 3, wherein the filtration means comprises a permeate outlet connected to a permeate outlet tube having sufficient strength for towing the apparatus.

5. A water purifying apparatus as claimed in any preceding claim, wherein the filtration means comprises a high pressure chamber and the pump means comprises means for pumping inlet water into said high pressure chamber.

6. A water purifying apparatus as claimed in claim 5, wherein the pump means comprises water inlet filters for pre-filtration before final filtration or permeation in the high pressure chamber.

7. A water purifying apparatus as claimed in claim 6, wherein the water inlet filters are located in an annular outer lower pressure chamber surrounding the high pressure chamber.

8. A water purifying apparatus as claimed in any preceding claim, wherein the pump means comprises a swash plate driven by the impeller, and pistons connected to the swash plate and running in cylinders connected for pumping inlet water to the high pressure chamber.

9. A water purifying apparatus as claimed in any preceding claim, wherein the filtration means comprises a tubular filter having a central duct for flow of clean water after being forced radially inwards through the filter.

10. A water purifying apparatus as claimed in any of claims 5 to 9, wherein the apparatus is a desalination apparatus, and the high pressure chamber contains a reverse osmosis membrane.

11. A water purifying apparatus as claimed in claim 10, wherein the membrane is a spiral-wound semi-permeable reverse osmosis membrane having a central perforated duct to direct the flow of permeate after being permeated radially inwardly through the membrane.

12. A water purifying apparatus as claimed in claim 11, wherein the high pressure chamber comprises a brine outlet valve adjacent to an end of the membrane.

13. A water desalination apparatus comprising:
a streamlined housing of substantially circular cross-sectional shape;
an impeller mounted on the housing and driving a high pressure water pump within the housing;
a water inlet in the housing for delivery of sea water to the high pressure pump as the apparatus is drawn through the sea, and
a high pressure reverse osmosis chamber comprising:-
an inlet valve for receiving water pumped by the high pressure pumps, and
a reverse osmosis membrane connected to a permeate outlet for delivery of permeated water to an outlet tube, and to a brine outlet for delivery of brine to the sea.

14. A water desalination apparatus as claimed in claim 13, wherein the membrane is a spiral-wound semi-permeable membrane having a central perforated duct to direct the flow of permeate after being permeated radially inwardly through the membrane.
